# EUROPÄISCHE PATENTSCHRIFT

(11) **EP 2 543 831 B1**
(45) Veröffentlichungstag und Bekanntmachung des Hinweises auf die Patenterteilung: **10.05.2017**
(21) Anmeldenummer: 12004816.0
(22) Anmeldetag: 28.06.2012
(51) Int. Cl.: F01L 1/18, F01L 1/08, F01L 1/26

(54) **Ventilsteuerung für mindestens ein Ventil einer Brennkraftmaschine**
Valve drivel for at least one valve of a combustion engine
Commande de soupape pour au moins une soupape d'un moteur à combustion interne

(30) Priorität: 02.07.2011 DE 102011106395
(43) Veröffentlichungstag der Anmeldung: 09.01.2013
(73) Patentinhaber: MAN Truck & Bus AG, 80995 München (DE)
(72) Erfinder: Vogel, Werner, 91595 Burgoberbach (DE); Möller, Heribert, 91623 Sachsen (DE)

(56) Entgegenhaltungen:
- WO-A1-2007/053070
- WO-A1-2010/043242
- WO-A2-2010/054310
- DE-A1- 2 355 794
- DE-A1- 3 444 901
- DE-A1- 19 644 916
- DE-A1-102007 032 990
- DE-A1-102008 022 937
- DE-A1-102009 056 613

## Beschreibung

Die Erfindung betrifft eine Ventilsteuerung für mindestens ein Ventil einer Brennkraftmaschine bei der die Bewegung wenigstens eines Nockens einer Nockenwelle durch einen Übertragungsmechanismus auf einen Ventilschaft des Ventils übertragbar ist, wobei der Übertragungsmechanismus zumindest ein drehbar auf einer Achse gelagertes Übertragungsmittel umfasst, das über ein am Übertragungsmittel angeordnetes Kontaktelement mit der Nockenwelle in Verbindung steht.

Aus WO 2007053070 ist eine Ventiltrieb mit einem Kontaktelement, um einem Gegenstück zu folgen bekannt, , wobei eine Kontaktfläche des Kontaktelement ein Balligkeitsprofil aufweist, um die Arbeitslebensdauer des Kontaktelementes und des Gegenstücks zu verlängern.

Aus der Offenlegungsschrift DE 196 12 551 A1 geht ein Ventiltrieb hervor, der aus zwei gemeinsamen auf einem separaten Rohrabschnitt schwenkbeweglich angeordneten Nockenfolgerteilen besteht, wobei die Nockenfolgerteile einen Kipphebel bilden, der an einem Drehzentrum drehbar gelagert ist. Das Nockenfolgerteil besitzt eine Rolle, gegen die ein Nocken anläuft. Gleichzeitig weist das weitere Nockenfolgerteil an dessen anderem Ende ein hydraulisches Spielausgleichselement auf, welches an dieser Stelle nicht näher beschrieben wird.

Ferner ist aus der Patentschrift US 4,693,214 eine Stößeleinrichtung für Brennkraftmaschinen mit einer Nockenwelle bekannt, deren Nocken ein variables Profil aufweisen und die wenigstens ein Ventil betätigt. Hierbei wird durch Längsverstellung der Nockenwelle eine unterschiedliche Ansteuerung des Ventils realisiert.

Die Offenlegungsschrift DE 42 30 809 A1 lehrt eine Ventilsteuerung für mindestens zwei gleichzeitig betätigbare und eine Gruppe bildende Ventile wobei eine Steuernocke der Ventilsteuerung an ihrem Umfang eine Kugelbahn aufweist in welche eine Kugel eingreift.

DE 10 2009 056 613 A1 beschreibt einen Antriebsstrang mit einem stufenlosen Getriebe, wobei ein dreidimensionaler Nocken axial verschiebbar angeordnet ist und von, an ortsfest drehbar gelagerten Schlepphebeln angeordneten, balligen Rollen abgegriffen wird. Die balligen Rollen sind der Außenform des dreidimensionalen Nockens angepasst. Die Schlepphebel sind ortsfest angeordnet.

Die Offenlegungsschrift DE 10 2008 022 937 A1 lehrt den Kontakt eines Raumnockens mit einer Ventilnockenwelle. In einer Ausführungsform eines vollvariablen Ventiltriebs ist die Verwendung einer Ventilnockenwelle mit dreidimensional ausgebildeten Nocken - so genannten, Raumnocken - vorgesehen, wobei die Ventilnockenwelle über Steuereinrichtungen axial verschoben und radial verdreht werden kann. Durch die axiale Verschiebung der Ventilnockenwelle, kann auf deren Beeinflussung der Kipphebellage eingewirkt werden.

Die Offenlegungsschrift DE 34 44 901 A1 beschreibt einen Nocken der mit einem Tassenstößel zusammenwirkt, wobei der Nocken eine konkave und der Tassenstößel eine konvexe Kontaktfläche aufweist. Der Tassenstößel ist in seiner relativen Lage zu dem Nocken ortsfest in einem Gehäuse der Brennkraftmaschine angeordnet und führt eine Hin- und Herbewegung entlang seiner Zylinderachse 16 aus.

Die aus dem Stand der Technik bekannten Kipphebel sind mit einer Lagefixierung in Achsrichtung auf Ihren Kipphebelachsen versehen, so dass über entsprechende Anlageflächen an den Flanken der Kipphebel und des Kipphebellagerbocks eine Lagefixierung in Achsrichtung erfolgt. Diese Flanken werden häufig durch Kalibrierung des Schmiederohlings bzw. durch mechanische Bearbeitung erstellt.

Kipphebelbockseitig erfolgt die Fixierung über entsprechend bearbeitete Flächen, sowie zusätzliche Bauteile, wie Scheiben und Sicherungsringe.

Der Erfindung liegt die Aufgabe zugrunde, eine Ventilsteuerung für mindestens ein Ventil einer Brennkraftmaschine mit den Merkmalen des Oberbegriffs des Anspruchs 1 derart weiterzubilden, dass diese einen geringeren Bauraum einnimmt, eine geringere Anzahl an Bauteilen im Ventiltrieb benötigt und/oder dass die Problematik des "Kantenträgers" im Kontaktbereich von Nocke und Kontaktelement entschärft wird. Ferner ist es Aufgabe der Erfindung durch die erfindungsgemäße Maßnahme die Hertzsche-Pressung durch Reduktion der erforderlichen Balligkeit zu reduzieren. Darüber hinaus ist es Aufgabe der Erfindung die Herstellkosten eines Ventiltriebs zu reduzieren.

Diese Aufgabe wird durch die Merkmale einer Ventilsteuerung gemäß Anspruch 1, einem Verfahren gemäß Anspruch 13 sowie durch einen Motor gemäß Anspruch 14 gelöst. Vorteilhafte Weiterbildungen der Erfindung ergeben sich aus den Unteransprüchen 2 - 12 bzw. 15.

Als Kern der Erfindung wird es angesehen, dass die Kontaktfläche des Kontaktelementes und die Umfangsfläche der Nocke zumindest bereichsweise gekrümmte, zueinander korrespondierende Konturen in Achsrichtung der Achse auf der der Kipphebel gelagert ist aufweisen und dass das Übertragungsmittel axial bewegbar auf einem Achskörper der Achse 6 gelagert. Durch die korrespondierenden Konturen von Kontaktelement und Nocke kann eine Relativbewegung der beiden Kontaktpartner zueinander in Achsrichtung unterbunden oder abgeschwächt werden. Durch diese bedingte Bewegbarkeit von Kontaktelement und Nocke in Achsrichtung wird eine axiale "Selbstführung" des Kontaktelementes und damit des Übertragungsmittels auf seiner Achse, ausgehend von der Nocke erreicht.

Durch die Krümmung der Umfangsfläche der Nocke in Achsrichtung und durch die entsprechende korrespondierende Anpassung des Kontaktelementes wird hierzu - schematisch betrachtet - ein Kontakt in Form einer gekrümmten Linie realisiert.

Mit den korrespondierenden Konturen von Nocke und Kontaktelement ist gemeint, dass diese eine sich zumindest annähernd ergänzende Form aufweisen. Das heißt, dass die Nocke in Achsrichtung konkav, das Kontaktelement in Achsrichtung konvex ausgebildet ist oder umgekehrt. Bevorzugt sind die korrespondieren Konturen dahingehend ausgestaltet, dass diese zumindest annähernd "zusammenpassen", also sich bei einem Zusammensetzten eine möglichst Mittig berührende Kontaktfläche bilden, die schematisch betrachtet eine gekrümmte Berührlinie bildet. Vorzugsweise ist diese Berührlinie wenigstens ein Viertel so lang wie die maximale Breite des kürzeren der beiden Kontaktpartner (Nocke und Kontaktelement).

Vorzugsweise ist das Kontaktelement als Rollkörper ausgebildet der über eine Rollkörperachse an dem Übertragungsmittel definiert drehbar gelagert ist, wobei die Umfangsfläche des Rollkörpers als Kontaktfläche zu der Nocke dient. Vorteilhaft ist ein tonnenförmiger Rollkörper. Vorzugsweise verläuft die Drehachse zumindest eines Teils des Übertragungsmittels parallel zur Drehachse des Rollkörpers. Dabei kann sowohl der Rollkörper als auch alternativ die Nocke mit einer konkaven Ausnehmung zur Aufnahme des entsprechend konvex ausgebildeten Gegenstückes versehen sein. Alternativ zu einem Rollkörper kann das Kontaktelement auch als Kugelkörper ausgebildet sein, der über eine Kugelaufnahme an dem Übertragungsmittel beweglich gelagert ist, wobei die Oberfläche des Kugelkörpers als Kontaktfläche zur Nocke dient. Im Falle eines Kugelkörpers ist dieser zwar drehbar am Übertragungsmittel gelagert, jedoch verfügt dieser nicht über eine definierte Drehachse. Ferner muss bei der Ausgestaltung des Kontaktelementes als Kugelkörper die Nockenwelle mit einer deren Umfang umgebenden Rille zur Aufnahme der Kugel versehen sein. Schließlich kann das Kontaktelement in einer weiteren Alternative als lage- und drehfixiertes Gleitstück an dem Übertragungsmittel angeordnet sein.
als Achskörper wird sowohl ein das Übertragungsmittel durchdringender stabförmiger Körper verstanden als auch Elemente, welche das Übertragungsmittel drehbar mit zum Beispiel einem Lagerbock verbinden.

In einer weiteren vorteilhaften Ausführungsform ist die Krümmung der Nocke und/oder des Kontaktelementes über die gesamte Konturlänge nicht konstant, sondern umfasst, dass die Kontur in Achsrichtung der Nocke und/oder des Kontaktelementes mit einem Mittelbereich und mit zumindest einem randseitigen Randbereich versehen ist, wobei der Mittelbereich vorzugsweise ausschließlich konvex oder ausschließlich konkav ausgebildet ist. Hierbei kann es vorteilhaft sein, wenn der Randbereich selbst und/oder zwischen dem Randbereich und dem Mittelbereich ein Zwischenbereich ausgebildet ist, derart, dass dieser eine zumindest vom Mittelbereich unterschiedliche Geometrie oder Dimensionierung der Kontur aufweist. Durch diese gezielte Veränderung entlang der Kontur kann beispielsweise eine Zentrierfunktion realisiert werden, die zur Folge hat, dass durch entsprechende Krümmungen der Kontur die Kontaktpartner geführt werden.

In einer konkreten Ausgestaltung der Ventilsteuerung hat es sich als vorteilhaft erwiesen, wenn die konkave Kontur in Achsrichtung der Kontaktfläche des Kontaktelementes oder der Umfangskontur des Nockens einen Radius von 8 bis 50 mm vorzugsweise von 10 bis 40 mm, besonders bevorzugt von 15 bis 25 mm aufweist.

Ein weiteres besonders vorteilhaftes Verhältnis, stellt das Verhältnis des Radius der konkaven Kontur in Achsrichtung der Rolle zum Außendurchmesser der Rolle dar, das zwischen 1,00:0,15 und 1,00:3,45, vorzugsweise zwischen 1,0:0,5 und 1,0:1,5 beträgt und/oder das Verhältnis des Radius der konkaven Kontur der Rolle zur Breite der Rolle zwischen 1,00:0,30 und 1,0:6,0, vorzugsweise zwischen 1,0:0,5 und 1:3, besonders bevorzugt zwischen 1:1 und 1,0:1,5 beträgt.

Das Übertragungsmittel kann vorzugsweise als Kipp- oder Schlepphebel ausgebildet sein, wobei die Drehachse des Kipp- oder Schlepphebels sich sowohl im Mittel- als auch im Endbereich des Hebels befinden kann.

In einer besonders bevorzugten Ausführungsform des Erfindungsgegenstandes ist das Übertragungsmittel axial bewegbar auf seiner Lagerachse gelagert. Insbesondere durch die erfindungsgemäße Ausgestaltung des Kontaktelement-Nockenkontaktes und die daraus resultierende Axialführung des Übertragungsmittels, kann das Übertragungsmittel damit axial bewegbar auf seiner Achse gelagert werden, da eine zumindest für bestimmte Betriebsphasen ausreichende Hemmung der Axialbewegbarkeit des Übertragungsmittels auf seiner Achse durch die erfindungsgemäße Gestaltung gewährleistet werden kann. Vorzugsweise ist die axiale Bewegbarkeit des Übertragungsmittels durch zumindest ein Sicherungselement begrenzt. Beispielsweise kann dieses Sicherungselement derart ausgestaltet sein, dass bei einer Fehlfunktion oder einem Teildefekt der Ventilsteuerung eine begrenzte axiale Bewegbarkeit des Übertragungsmittels auf seiner Achse sichergestellt werden kann.

Vorzugsweise ist die Achse des Übertragungsmittels auf einem Lagerbock befestigt und der Lagerbock wenigstens mit einer Aufnahmeausnehmung mit Flankenbereichen versehen.

In den Innenräumen der Aufnahmeausnehmung ist zumindest bereichsweise das Übertragungsmittel einragend angeordnet, wobei die Flankenbereiche das Übertragungsmittel beidseitig zumindest teilweise umgreifen und damit die oben beschriebene Funktion eines Sicherungselementes ausführbar ist.

Beispielsweise ist der beidseitige Umgriff des Übertragungsmittels durch die Flankenbereiche mit einem Abstand zwischen den Flankenbereichen und dem Übertragungsmittel versehen, der vorzugsweise einen Abstand von 0,5 bis 40,0 mm besonders bevorzugt von 1 bis 5 mm umfasst.

Darüber hinaus hat es sich als günstig erwiesen, wenn auf dem Lagerbock ein Achselement zur Lagerung von wenigstens zwei Übertragungsmitteln befestigt ist und der Lagerbock mindestens zwei Aufnahmeausnehmungen aufweist, in deren Innenraum jeweils ein Übertragungsmittel aufnehmbar ist, wobei vorzugsweise im Bereich eines Mittelstegs des Lagerbocks der zwischen den wenigstens zwei Aufnahmeausnehmungen angeordnet ist, ein Verbindungsmittel zur Fixierung der Achse angeordnet ist. Durch diese beispielsweise paarweise Anordnung der Übertragungsmittel an mehreren innerhalb eines Motors verbauten Achsen kann eine vorteilhafte Gestaltungsfreiheit in der Anordnung der Übertragungsmittel und der einzelnen Achsen gewährleistet werden und damit das Volumen der gesamten Ventilsteuerung reduziert werden.

In einer vorteilhaften Weiterbildung der Erfindung sind auf einer Achse wenigstens zwei Übertragungsmittel und vorzugsweise vier Übertragungsmittel, besonders bevorzugt ausschließlich zwei Übertragungsmittel gelagert, die zu Ventilen unterschiedlicher Zylinder eines Motors zugeordnet sind. So kann beispielsweise vorgesehen sein, dass ein erstes Übertragungsmittel einer Achse wenigstens ein Auslassventil eines ersten Zylinders und ein zweites Übertragungsmittel der selben Achse wenigstens ein Auslassventil eines zweiten Zylinders steuert. Durch eine derartige Zuordnung von Übertragungsmitteln zu in Reihe angeordneten Zylindern einer zum Beispiel 4, 6 oder 8 Zylinder umfassenden Brennkraftmaschine wird eine kompakte Bauform der Brennkraftmaschine erreicht.

Neben der gegenständlichen Ventilsteuerung umfasst der Erfindungsgedanke auch ein Verfahren zu Begrenzung der axialen Bewegbarkeit eines Übertragungsmittels zur Übertragung der Bewegung eines Nockens einer Nockenwelle auf wenigstens ein Ventil, wobei das Übertragungsmittel auf einer Achse gelagert und mit einem Kontaktelement versehen ist. Hierbei ist es wesentlich, dass das Übertragungsmittel axial bewegbar auf der Achse gelagert ist, wobei die Kontaktfläche des Kontaktelementes und die Umfangsfläche der Nocke zumindest bereichsweise in Achsrichtung gekrümmte und zueinander korrespondierende Konturen aufweisen, so dass durch die gekrümmten korrespondierenden Berührflächen von Kontaktelement und Nocke zumindest eine Begrenzung der axialen Bewegbarkeit des Übertragungsmittels relativ zu der Achse gewährleistet wird. Dies wird dadurch erreicht, dass die Nocke in Achsrichtung lagefixiert ist und durch die bedingte Bewegbarkeit in Achsrichtung von Nocke und Kontaktelement bzw. Nocke und Übertragungsmittel, das Kontaktelement bzw. das Übertragungsmittel damit indirekt über die Nocke in seiner Bewegung in Achsrichtung begrenzt oder gelenkt wird. Dieses Verfahren wird vorzugsweise bei Übertragungsmittel angewandt die als Kipp- oder Schlepphebel ausgebildet sind und/oder als Kontaktmittel eine am Kipp- oder Schlepphebel gelagerte Rolle und/oder Kugel umfassen.

Schließlich umfasst der Erfindungsgedanke einen Motor mit einer Ventilsteuerung nach Anspruch 1 und/oder einen Motor an dem das Verfahrens zur Begrenzung der Bewegbarkeit des Übertragungsmittels nach Anspruch 14 zur Anwendung kommt. Ein derartig ausgebildeter Motor kann hierbei auf maximal zwei in Geometrie und/oder Dimensionierung unterschiedliche Kipp- oder Schlepphebel zurückgreifen. Im Idealfall kann auch ein einheitlicher Kipp- oder Schlepphebel auf sämtliche Ventilansteuerungen der Ventilsteuerung verwendet werden. Insbesondere dadurch, dass die Kipp- oder Schlepphebel keine direkte, anliegende axiale Lagebegrenzung an ihren Seitenflächen aufweisen, können damit die Kipp- oder Schlepphebel einheitlicher ausgebildet werden und damit die Anzahl der benötigten Varianten der Kipp- oder Schlepphebel des Motors und gleichzeitig die Herstellungskosten reduziert werden. Insbesondere bei unterschiedlichen Abständen zwischen den Einlassventilen und der Zylindermitte und/oder zwischen den Auslassventilen und der Zylindermitte bei gleichzeitiger Lagerung wenigstens zweier Übertragungsmittel für ein Einlass- und ein Auslassventil auf einer gemeinsamen Achse kann die axial bewegliche Lagerung die benötigten Varianten an Übertragungsmitteln reduzieren.

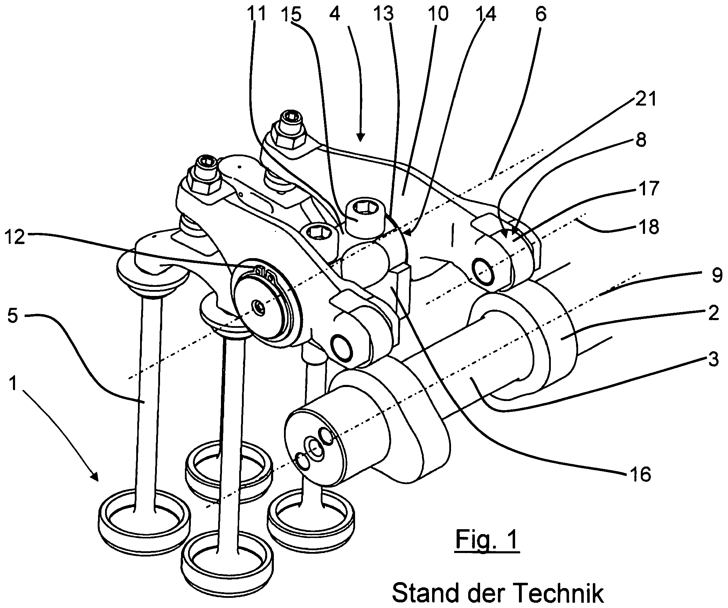

Die Erfindung ist anhand von Ausführungsbeispielen in den Zeichnungsfiguren näher erläutert. Diese zeigen
- Fig. 1:: eine perspektivische Darstellung zweier Kipphebel auf einer Achse wobei die Kipphebel durch Sicherungsringe in ihrer axialen Verlagerbarkeit gehemmt sind;

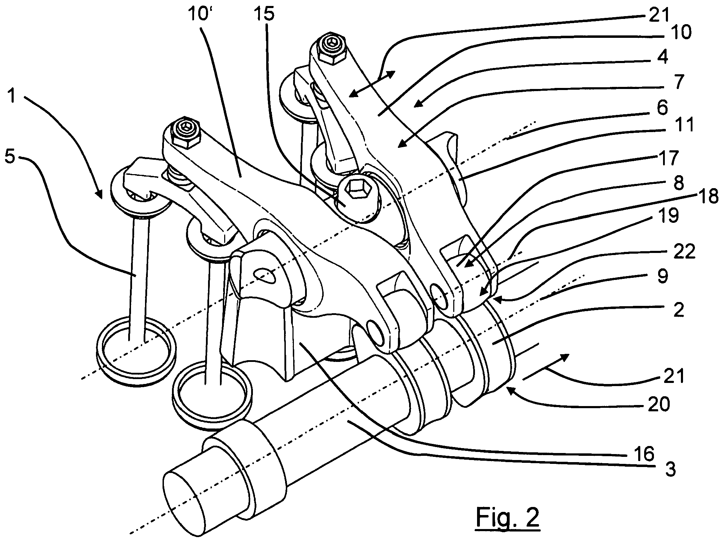

- Fig. 2:: eine schematische perspektivische Darstellung einer erfindungsgemäßen Ventilsteuerung wobei die Nocken der Nockenwelle mit einer konkaven und die Kontaktelemente der Kipphebel mit einer konvexen Kontur in Achsrichtung versehen sind;
- Fig. 3:: eine schematische Schnittdarstellung des Kontaktbereichs von Rolle und Nocke gemäß Figur 2;
- Fig. 4:: eine schematische Schnittdarstellung des Kontaktbereichs gemäß Figur 3 zur Darlegung des Kantenträgereffekts;
- Fig. 5:: eine schematische Vollschnittdarstellung einer erfindungsgemäß gekrümmten Kontur einer Rolle;

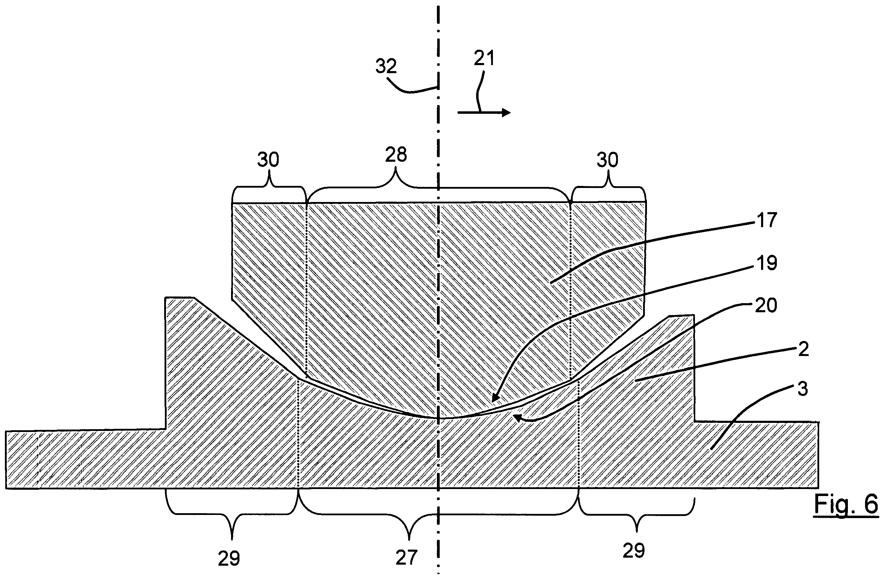

- Fig. 6:: eine schematische Vollschnittdarstellung des Kontaktbereichs von Rollkörper und Nocke;

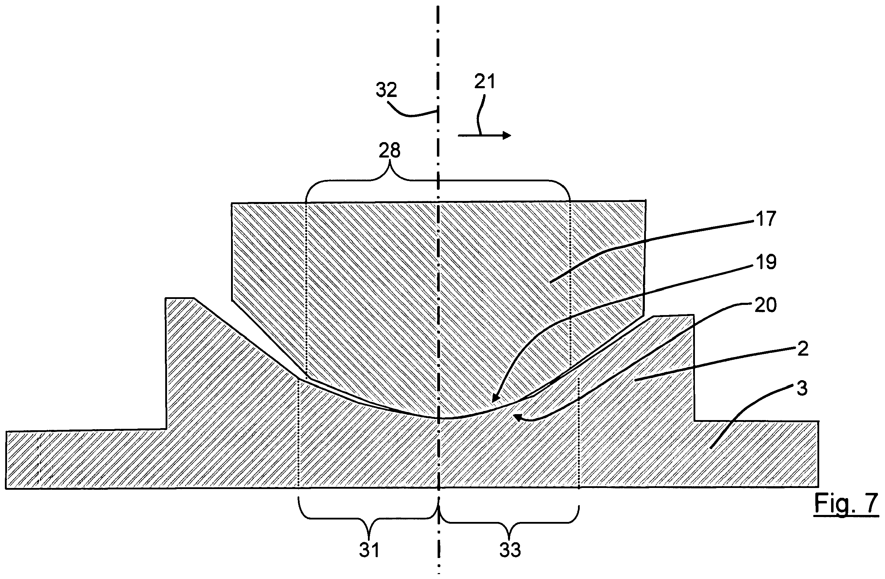

- Fig. 7:: eine schematische Vollschnittdarstellung einer alternativen Ausführung des Kontaktbereichs aus Figur 6;
- Fig. 8:: eine schematische Darstellung einer montierten Baugruppe bestehend aus Lagerbock, Achskörper, Kipphebel, Rollen und Fixiermittel.

In Zeichnungsfigur 1 ist eine aus dem Stand der Technik bekannte Ventilsteuerung 1 abgebildet, die für mindestens ein Ventil 1 einer Brennkraftmaschine (nicht dargestellt) vorgesehen ist, wobei die Bewegung wenigstens eines Nockens 2 einer Nockenwelle 3 durch einen Übertragungsmechanismus 4 auf einen Ventilschaft 5 des Ventils 1 überträgt. Der Übertragungsmechanismus 4 umfasst dabei zumindest ein drehbar auf einer Achse 6 gelagertes Übertragungsmittel 7, das wiederum mit einem Kontaktelement 8 versehen ist, über welches das Übertragungsmittel 7 mit der Nockenwelle 3 in Kontakt steht. Durch die Drehbewegung der Nockenwelle 3 um deren Nockenwellenachse 9 wird das Übertragungsmittel 7 durch den Kontakt des Nockens 2 mit dem Kontaktelement 8 zu einer Drehbewegung über die Achse 6 gezwungen, sodass eine lineare Offnungs- und Schließbewegung des Ventils 1 entlang der Längsachse des Ventilschaftes 5 ausgeführt wird.

Die als Kipphebel 10, 10' ausgebildeten Übertragungsmittel 7 sind in der Ausführung gemäß Zeichnungsfigur 1 entlang der Achse 6 auf dem Achskörper 11 durch einen Sicherungsring 12 und auf der gegenüberliegenden Seite durch den Kontakt einer Anlagefläche 13 mit einer Stufe 14 des Achskörpers 11 entlang der Achse 6 lagerfixiert. Der Achskörper 11 ist ferner über Fixiermittel 15 auf einem Achsbock 16 befestigt.

Wie in Zeichnungsfigur 2 dargestellt, sind die Kontaktfläche 19 des Kontaktelementes 8 und die Umfangsfläche 20 der Nocke 2 zumindest bereichsweise mit gekrümmten und zueinander korrespondierenden Konturen in Achsrichtung 21 versehen. Mit der in der Zeichnungsfigur 2 mit dem Pfeil 21 dargestellten Achsrichtung 21 ist die Achse 6 um welche das Übertragungsmittel 7 drehbar gelagert ist gemeint, alternativ oder zusätzlich kann im Fall eines als Rollkörper 17 ausgebildeten Kontaktelementes 7 die Achsrichtung 21 sich auf die Rollkörperachse 18 beziehen. Es soll damit zum Ausdruck gebracht werden, das die Krümmung der Kontaktfläche 19 und der Umfangsfläche 20 einen Formschluss in Achsrichtung 21 bilden und damit die bezüglich der in Richtung der Achse 6 und/oder der Rollkörperachse 18 wirkenden Kräfte auf das Übertragungsmittel 7, 7' und/oder des Kontaktelementes beeinflussen.

Das Kontaktelement 8 ist als tonnenförmiger Rollenkörper 17 ausgebildet, der über eine Rollkörperachse 18 an dem Übertragungsmittel 7 drehbar gelagert ist, wobei die Kontaktfläche 19 als Umfangsfläche 22 des Rollkörpers 17 ausgebildet ist. Insbesondere aus Zeichnungsfigur 3 ist der Kontaktbereich zwischen Kontaktelement 8 und der Nocke 2 dargestellt. Hierbei ist die Umfangsfläche 22 des Rollkörpers 17 mit einem konvexen Konturbereich in Achsrichtung 21 und die Umfangsfläche 20 der Nocke 2 mit einem konkaven Konturbereich in Achsrichtung 21 ausgebildet. Grundsätzlich ist es auch möglich, die Kontaktfläche 19 konkav und die Umfangsfläche mit einem konvexen Konturbereich in Achsrichtung 21 zu versehen (nicht dargestellt).

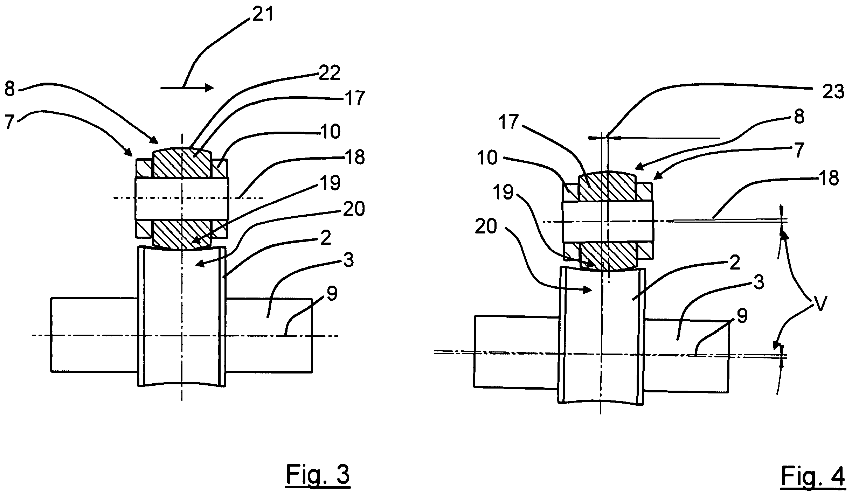

Durch eine während des Betriebs der Brennkraftmaschine erfolgende Verbiegung V der Nockenwelle 3 und/oder des Kipphebels 10 kann im Stand der Technik das als "Kantenträger" bekannte Problem auftreten. Um einen Kantenlauf des Rollkörpers 17 auf der Nocke 2 zu verhindern oder dessen negative Folgen zu reduzieren ist es vorteilhaft, gemäß der Erfindung die Kontaktfläche 19 des Kontaktelementes 8 und die Umfangsfläche 20 der Nocke 2 zumindest bereichsweise gekrümmt und mit zueinander korrespondierende Konturen in Achsrichtung 21 und damit in Richtung der Nockenwellenachse 9 und/oder Rollkörperachse 18 zu versehen, vgl. Figur 4. Dadurch kann auch bei einer Verbiegung V von Nockenwelle 3 und Übertragungsmittel 7 und einem damit einhergehenden Versatz 23 der Auflagermittelpunkte/Kontaktmittelpunkte von Nocke 2 und Rollkörper 17 ein ausschließlicher Kontakt an den Kanten des Rollkörpers 17 vermieden werden.

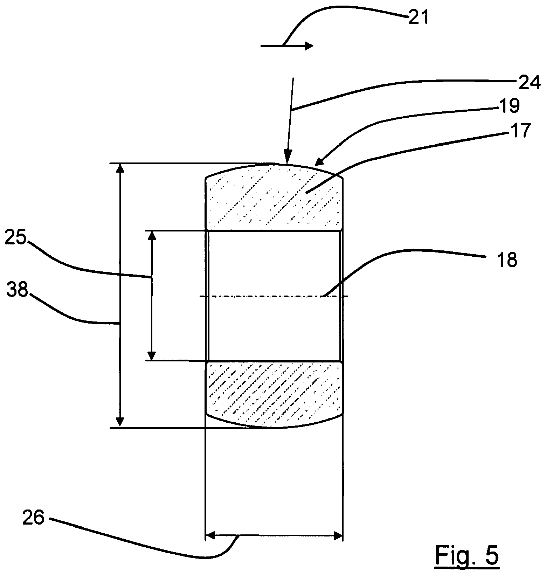

Eine bevorzugte Ausführung für die konkrete Ausgestaltung des Rollkörpers 17 ist in Zeichnungsfigur 5 dargelegt. Hierbei ist die konvexe Kontur in Achsrichtung 21 der Kontaktfläche 19 des als Rollkörper 17 ausgebildeten, Kontaktelementes 8 mit einem Radius 24 von 8 bis 50 mm, vorzugsweise 10 bis 40 mm, besonders bevorzugt von 15 bis 25 mm versehen. Alternativ kann die konvexe Kontur in Achsrichtung 21 auch an der Umfangsfläche 20 des Nockens 2 innerhalb der oben beschriebenen Intervalle ausgelegt sein. Ferner ist aus Figur 5 erkennbar, dass der Rollkörper 17 mit einer zentralen Bohrung entlang seiner Rollkörperachse 18 versehen ist, die einen Innendurchmesser 25 aufweist und um welche der Rollkörper 17 drehbar gelagert ist.

Für ein als Rollkörper 17 ausgebildetes Kontaktelement 8 hat es sich gemäß Zeichnungsfigur 6 als vorteilhaft erwiesen, wenn das Verhältnis des Radius 24 der konvexen Kontur in Achsrichtung 21 des Rollkörpers 17 zum Außendurchmesser 38 des Rollkörpers 17 zwischen 1,00:0,15 und 1,00:3,45, vorzugsweise zwischen 1,0:0,5 und 1,0:1,5 beträgt und/oder das Verhältnis des Radius 17 der konvexen Kontur in Achsrichtung des Rollkörpers 17 zur Breite 26 des Rollkörpers 17 zwischen 1,00:0,30 und 1:6, vorzugsweise zwischen 1,0:0,5 und 1:30, besonders bevorzugt zwischen 1:1 und 1:1,5 beträgt.

In den Zeichnungsfiguren 6 und 7 ist der Kontaktbereich von Kontaktelement 8 und Nocke 2 im Detail schematisch dargestellt, hierbei ist erkennbar, dass die Kontur in Achsrichtung 21 der Nocke 2 und des Kontaktelementes 8 einen Mittenbereich 27, 28 aufweist und einen randseitigen Randbereich 29, 30 umfasst. In der dargestellten Ausführungsform ist der Mittelbereich 27 der Nocke 2 ausschließlich konkav und der Mittelbereich 28 des Kontaktelementes 8 ausschließlich konvex ausgebildet.

Der Randbereich 29, 30 kann entweder wie dargestellt eine andere Krümmung aufweisende konvexe oder konkave, den Mittelbereich 27, 28 fortsetzende Ausformung haben, oder auch entgegengesetzt gekrümmt sein (nicht dargestellt) oder keine Krümmung aufweisen.

Vorzugsweise ist der Randbereich 29, 30 der Nocke 2 oder des Kontaktelementes 8 derart ausgebildet, dass dieser maximal % der Gesamtlänge der Kontur der Nocke 2 bzw. des Kontaktelementes 8, vorzugsweise maximal 1/5, besonders bevorzugt maximal 1/8 der Gesamtlänge der Kontur der Nocke 2 bzw. des Kontaktelementes beträgt.

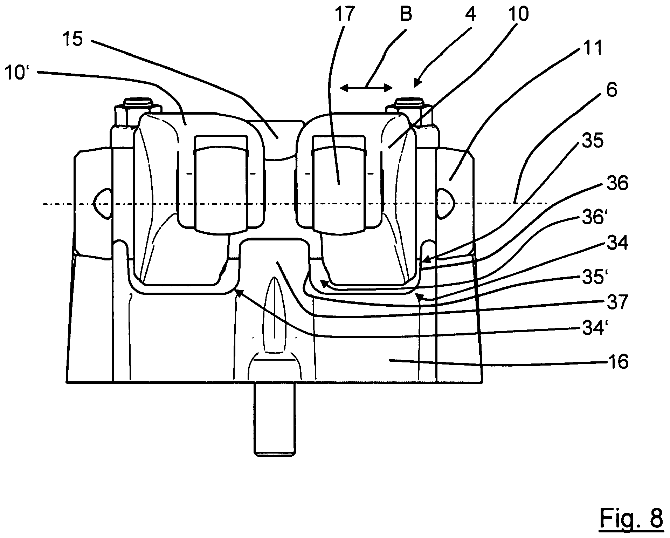

Gemäß Zeichnungsfigur 7 ist es vorteilhaft, wenn in einem Bereich 31 die Nocke 2 und/oder das Kontaktelement 8 eine erste gekrümmte Kontur in Achsrichtung 21 aufweist, und in einem zweiten, ausgehend von der Mittellängsachse 32 äquidistant gegenüberliegend angeordneten Bereich 33 der Nocke 2 bzw. des Kontaktelements 8 eine zweite gekrümmte Kontur aufweist, wobei die erste und die zweite gekrümmte Kontur der jeweiligen Bereiche 31, 33 unterschiedliche Krümmungsradien aufweisen. Durch den wie in Figur 8 dargestellten unsymmetrischen Konturverlauf über die Länge des Kontaktbereiches ist es möglich, dass beispielsweise bei Verwendung nicht symmetrischer Kipphebel 10 den bei deren Bewegung auf Grund der fehlenden Symmetrie auftretenden ungleichmäßigen Kräfte entgegengewirkt werden kann. So ist es möglich durch entsprechende Anpassung einer unsymmetrischen Krümmungskontur für einen Nocke-Kontaktelement-Kontaktbereich den oben angeführten Kräften entgegenzuwirken. Damit können etwaige negative bzw. unerwünschte Dynamikeffekte resultierend aus der Bewegung der asymmetrischen Kipphebeln 10 kompensiert werden.

Zeichnungsfigur 8 zeigt den Achskörper 11 der Achse 6 welcher auf einem Lagerbock 16 befestigt ist. Der Lagerbock 16 ist mit zwei Aufnahmeausnehmungen 34, 34' versehen, wobei jede Aufnahmeausnehmung 34, 34' jeweils zwei Flankenbereiche 35, 35' umfasst. Im Innenraum der Aufnahmeausnehmung 34, 34' ragt jeweils ein Übertragungsmittel 7 bzw. ein Kipphebel 10, 10' hinein, wobei die Flankenbereiche 35, 35' das Übertragungsmittel 7 beidseitig zumindest teilweise umgreift.

Dieser Umgriff des Übertragungsmittel 7 durch die Flankenbereiche 35, 35' weist einen Abstand 36, 36' auf, der vorzugsweise 0,5 bis 40,0 mm, besonders bevorzugt 1 bis 5 mm beträgt.

Der Lagerbock 16 weist einen Mittelsteg 37 auf, der zwischen wenigstens zwei Aufnahmeausnehmungen 34, 34' angeordnet ist, wobei im Bereich des Mittelstegs 37 ein Fixiermittel 15 zur Fixierung des Achskörpers auf dem Lagerbock 16 angeordnet ist.

Durch den Abstand 36, 36' wird eine in Grenzen zugelassene Bewegung B der Übertragungsmittel 7, 7' gewährleistet, wobei für den Fall einer Fehlfunktion oder eines Defektes die Übertragungsmittel 7 durch die Flankenbereiche 35, 35' von einem Lösen vom Achskörper 11 gehemmt werden. Die Flankenbereiche 35, 35' können damit als Sicherungselement dienen. Alternativ oder zusätzlich dazu kann der Achskörper 11 mit einem separaten Sicherungskörper wie beispielsweise einem Sicherungsring versehen sein, wobei der Sicherungsring im Endmontagezustand von dem Übertragungsmittel 7 beabstandet (Abstände 36, 36') ist und erst im Falle einer Fehlfunktion oder eines Defektes ein "Herunterwandern" des Übertragungsmittels 7 von dem Achskörper 11 verhindert.

In den dargestellten Ausführungen ist das Übertragungsmittel 7 als Kipphebel 10 dargestellt. Alternativ oder zusätzlich kann das erfindungsgemäße Prinzip auch an einem Motor Verwendung finden, bei dem wenigstens ein Übertragungsmittel 7 als Schlepphebel ausgebildet ist. Bei einem Schlepphebel befindet sich die Drehachse des Hebels an einem Endbereich und die Krafteinleitung durch die Nockenwelle 3 auf ein Kontaktelement 8 an einem Mittelbereich.

**BEZUGSZEICHENLISTE**

| | | | |
|---|---|---|---|
| 1 | Ventil | 22 | Umfangfläche v. 17 |
| 2 | Nocken | 23 | Versatz |
| 3 | Nockenwelle | 24 | Radius v. 17 |
| 4 | Übertragungsmechanismus | 25 | Innendurchmesser v. 17 |
| 5 | Ventilschaft von 1 | 26 | Breite v. 17 |
| 6 | Achse | 27 | Mittelbereich v. 2 |
| 7, 7' | Übertragungsmittel | 28 | Mittelbereich v. 8 |
| 8 | Kontaktelement | 29 | Randbereich v. 2 |
| 9 | Nockenwellenachse v. 3 | 30 | Randbereich v. 8 |
| 10, 10' | Kipphebel | 31 | Bereich |
| 11 | Achskörper v. 6 | 32 | Mittellängsachse |
| 12 | Sicherungsring | 33 | Bereich |
| 13 | Anlagefläche v. 10 | 34, 34' | Aufnahmeausnehmung |
| 14 | Stufe v. 11 | 35, 35' | Flankenbereich |
| 15 | Fixiermittel | 36, 36' | Abstand zw. 35, 35' und 7 |
| 16 | Lagerbock | 37 | Mittelsteg v. 16 |
| 17 | Rollkörper | 38 | Außendurchmesser v. 17 |
| 18 | Rollkörperachse v. 17 | B | Bewegung v. 7, 7' |
| 19 | Kontaktfläche v. 8 | V | Verbiegung |
| 20 | Umfangsfläche v. 2 | | |
| 21 | Achsrichtung | | |

## Patentansprüche

1. Ventilsteuerung für mindestens ein Ventil einer Brennkraftmaschine bei der die Bewegung wenigstens eines Nockens (2) einer Nockenwelle (3) durch einen Übertragungsmechanismus (4) auf einen Ventilschaft (5) des Ventils (1) übertragbar ist wobei der Übertragungsmechanismus (4) zumindest ein drehbar auf einer Achse (6) gelagertes Übertragungsmittel (7), das vorzugsweise als Kipphebel (10) oder Schlepphebel ausgebildet ist umfasst, das über ein am Übertragungsmittel (7) angeordnetes Kontaktelement (8) mit der Nockenwelle (3) in Verbindung steht **dadurch gekennzeichnet, dass** die Kontaktfläche (19) des Kontaktelementes (8) und die Umfangsfläche (20) der Nocke (2) zumindest bereichsweise gekrümmte und zueinander korrespondierende Konturen in Achsrichtung (21) aufweisen und das Übertragungsmittel (7) axial bewegbar auf einem Achskörper (11) der Achse (6) gelagert ist.

2. Ventilsteuerung nach Anspruch 1, **dadurch gekennzeichnet, dass** das Kontaktelement (8) als Rollenkörper (17) ausgebildet ist, der über eine Rollenkörperachse (18) an dem Übertragungsmittel (7) drehbar gelagert ist wobei die Kontaktfläche (19) als Umfangsfläche (22) des Rollenkörpers (17) ausgebildet ist oder dass das Kontaktelement (8) als Kugelkörper ausgebildet ist, der über eine Kugelaufnahme an dem Übertragungsmittel (7) beweglich gelagert ist wobei die Kontaktfläche (19) als Oberfläche des Kugelkörpers ausgebildet ist.

3. Ventilsteuerung nach Anspruch 1 oder 2, **dadurch gekennzeichnet, dass** die Kontaktfläche (19) des Kontaktelementes (8) zumindest einen konvexen und die Umfangsfläche (20) der Nocke (2) zumindest einen konkaven Konturbereich in Achsrichtung (21) oder die Kontaktfläche (19) des Kontaktelementes (8) zumindest einen konkaven und die Umfangsfläche (20) der Nocke (2) zumindest einen konvexen Konturbereich in Achsrichtung (21) aufweisen.

4. Ventilsteuerung nach einem der Ansprüche 1 bis 3, **dadurch gekennzeichnet, dass** die Kontur in Achsrichtung (21) der Nocke (2) und/oder des Kontaktelementes (8), vorzugsweise des Rollenkörpers (17), einen Mittelbereich (27,28) und zumindest einen randseitigen Randbereich (29,30) umfasst wobei der Mittelbereich (27,28) vorzugsweise ausschließlich konvex oder ausschließlich konkav ausgebildet ist.

5. Ventilsteuerung nach einander vorhergehenden Ansprüche, **dadurch gekennzeichnet, dass** in einem ersten Bereich (31) die Nocke (2) und/oder das Kontaktelement (8) eine erste gekrümmte Kontur in Achsrichtung (21) aufweist und in einem zweiten, ausgehend von der Mittellängsachse (32) äquidistant angeordneten Bereich (33) der Nocke (2) und/oder des Kontaktelements (8) eine zweite gekrümmte Kontur aufweist, wobei die erste und die zweite gekrümmte Kontur unterschiedliche Krümmungsradien aufweisen.

6. Ventilsteuerung nach einem der Ansprüche 2 bis 5, **dadurch gekennzeichnet, dass** die konvexe Kontur in Achsrichtung (21) der Kontaktfläche (19) des Kontaktelementes (8) oder die konvexe Kontur der Umfangsfläche (20) des Nockens (2) einen Radius (24) von 8 bis 50 mm, vorzugsweise von 10 bis 40 mm, besonders bevorzugt von 15 bis 25 mm aufweist.

7. Ventilsteuerung nach einem der Ansprüche 2 bis 6, **dadurch gekennzeichnet, dass** das Verhältnis des Radius (24) der konvexen Kontur in Achsrichtung (21) des Rollkörpers (17) zum Außendurchmesser (38) des Rollkörpers (17) zwischen 1,00:0,15 und 1,00:3,45, vorzugsweise zwischen 1,0:0,5 und 1,0:1,5 beträgt und/oder das Verhältnis des Radius der konkaven Kontur der Rolle zur Breite der Rolle zwischen 1,00:0,30 und 1:6, vorzugsweise zwischen 1,0:0,5 und 1:30, besonders bevorzugt zwischen 1:1 und 1:1,5 beträgt.

8. Ventilsteuerung nach einem der vorhergehenden Ansprüche, **dadurch gekennzeichnet, dass** die axiale Bewegbarkeit des Übertragungsmittels (7) auf dem Achskörper (11) der Achse (6) durch zumindest ein Sicherungselement begrenzt ist.

9. Ventilsteuerung nach einem der vorhergehenden Ansprüche, **dadurch gekennzeichnet, dass** ein Achskörper (11) der Achse (6) auf einem Lagerbock (16) befestigt ist und der Lagerbock (16) wenigstens eine Aufnahmeausnehmung (34, 34') mit Flankenbereichen (35, 35') aufweist in deren Innenraum zumindest bereichsweise das Übertragungsmittel (7) einragt wobei die Flankenbereiche (35, 35') das Übertragungsmittel (7) beidseitig zumindest teilweise umgreifen.

10. Ventilsteuerung nach Anspruch 9, **dadurch gekennzeichnet, dass** der beidseitige Umgriff des Übertragungsmittels (7) durch die Flankenbereiche (35, 35') einen Abstand (36, 36') zwischen den Flankenbereichen (35, 35') und dem Übertragungsmittel (7) vorsieht, vorzugsweise beträgt der Abstand 0,5 bis 40,0 mm, besonders bevorzugt 1 bis 5 mm.

11. Ventilsteuerung nach Anspruch 9 oder 10, **dadurch gekennzeichnet, dass** auf dem Lagerbock (16) ein Achskörper (11) zur Lagerung wenigstens zweier Übertragungsmittel (7) befestigt, ist und der Lagerbock (16) mindestens zwei Aufnahmeausnehmungen (34, 34') aufweist, in deren Innenraum jeweils ein Übertragungsmittel (7) aufnehmbar ist wobei vorzugsweise im Bereich eines Mittelstegs (37) des Lagerbocks (16) der zwischen den wenigstens zwei Ausnahmeaufnehmungen (34, 34') angeordnet ist wenigstens ein Fixiermittel (15) zur Fixierung des Achskörpers (11) der Achse (6) angeordnet ist.

12. Ventilsteuerung nach einem der vorhergehenden Ansprüche, **dadurch gekennzeichnet, dass** auf zumindest einem Achskörper (11) wenigstens zwei Übertragungsmittel (7) und vorzugsweise maximal vier Übertragungsmittel (7), besonders bevorzugt genau zwei Übertragungsmittel (7) gelagert sind, die zu Ventilen (1) unterschiedlicher Zylinder eines Motors zugeordnet sind, vorzugsweise steuert ein erstes Übertragungsmittel (7) eines Achskörpers (11) einer Achse (6) wenigstens ein Auslassventil eines ersten Zylinders und ein zweites Übertragungsmittel (7) das auf dem selben Achskörper (11) angeordnet ist, wenigstens ein Einlassventil eines zweiten Zylinders.

13. Verfahren zur Begrenzung der axialen Bewegbarkeit eines Übertragungsmittels (7) zur Übertragung der Bewegung eines Nockens (2) einer Nockenwellen (3) auf wenigstens ein Ventil (1) wobei das Übertragungsmittel (7), vorzugsweise als Kipphebel (10) oder Schlepphebel ausgebildet, auf einem Achskörper (11) einer Achse (6) gelagert und mit einem Kontaktelement (8) versehen ist, das als Kontaktmittel zwischen dem Übertragungsmittel (7) und der Nockenwelle (3) angeordnet ist, **dadurch gekennzeichnet, dass** das Übertragungsmittel (7) axial bewegbar auf dem Achskörper (11) gelagert ist wobei die Kontaktfläche (19) des Kontaktelementes (8) und die Umfangsfläche (20) der Nocke (2) zumindest bereichsweise in Achsrichtung (21) gekrümmte und zueinander korrespondierende Konturen aufweisen, so dass durch die gekrümmten und korrespondieren Berührflächen von Kontaktelement (8) und Nocke (2) zumindest eine bedingte axiale Bewegbarkeit des Übertragungsmittels (7) relativ zu der Achse (6) gewährleistet wird.

14. Motor umfassend eine Ventilssteuerung und/oder ein Verfahren zur Begrenzung der axialen Bewegbarkeit eines axial auf einem Achskörper (11) einer Achse (6) gelagerten Übertragungsmittels (7) nach einem der vorhergehenden Ansprüche.

15. Motor nach Anspruch 14, **dadurch gekennzeichnet, dass** die Kipphebel (10) oder Schlepphebel eines Motors maximal zwei in Geometrie und/oder Dimensionierung unterschiedliche Kipphebel (10) oder Schlepphebel, vorzugsweise nur ein in Geometrie und Dimensionierung einheitlicher Kipphebel (10) oder Schlepphebel verwendet wird.

## Claims

1. Valve control for at least one valve of an internal combustion engine, in which the movement of at least one cam (2) of a camshaft (3) can be transmitted to a valve stem (5) of the valve (1) by a transmission mechanism (4), the transmission mechanism (4) comprising at least one transmission means (7) which is mounted rotatably on an axis (6) and is preferably designed as a rocker arm (10) or drag lever and which is connected to the camshaft (3) via a contact element (8) arranged on the transmission means (7), **characterized in that** the contact surface (19) of the contact element (8) and the circumferential surface (20) of the cam (2) have, at least in regions, curved and mutually corresponding contours in the axial direction (21), and the transmission means (7) is mounted axially moveably on an axial body (11) of the axis (6).

2. Valve control according to Claim 1, **characterized in that** the contact element (8) is designed as a roller body (17) which is mounted rotatably on the transmission means (7) via a roller body axis (18), the contact surface (19) being designed as a circumferential surface (22) of the roller body (17), or **in that** the contact element (8) is designed as a spherical body which is mounted movably on the transmission means (7) via a spherical receptacle, the contact surface (19) being designed as the surface of the spherical body.

3. Valve control according to Claim 1 or 2, **characterized in that** the contact surface (19) of the contact element (8) has at least one convex contour region in the axial direction (21) and the circumferential surface (20) of the cam (2) at least one concave contour region in the axial direction (21), or the contact surface (19) of the contact element (8) has at least one concave contour region in the axial direction (21) and the circumferential surface (20) of the cam (2) at least one convex contour region in the axial direction (21).

4. Valve control according to one of Claims 1 to 3, **characterized in that** the contour in the axial direction (21) of the cam (2) and/or of the contact element (8), preferably of the roller body (17), comprises a middle region (27, 28) and at least one edge-side marginal region (29, 30), the middle region (27, 28) preferably being designed to be solely convex or solely concave.

5. Valve control according to one of the preceding claims, **characterized in that**, in a first region (31), the cam (2) and/or the contact element (8) have/has a first curved contour in the axial direction (21), and, in a second region (33) of the cam (2) and/or the contact element (8), the said region being arranged equidistantly from the longitudinal mid-axis (32), have/has a second curved contour, the first and the second curved contour having different radii of curvature.

6. Valve control according to one of Claims 2 to 5, **characterized in that** the convex contour in the axial direction (21) of the contact surface (19) of the contact element (8) or the convex contour of the circumferential surface (20) of the cam (2) has a radius (24) of 8 to 50 mm, preferably of 10 to 40 mm, especially preferably of 15 to 25 mm.

7. Valve control according to one of Claims 2 to 6, **characterized in that** the ratio of the radius (24) of the convex contour in the axial direction (21) of the rolling body (17) to the outside diameter (38) of the rolling body (17) amounts to between 1.00:0.15 and 1.00:3.45, preferably to between 1.0:0.5 and 1.0:1.5, and/or the ratio of the radius of the concave contour of the roller to the width of the roller amounts to between 1.00:0.30 and 1:6, preferably to between 1.0:0.5 and 1:30, especially preferably between 1:1 and 1:1.5.

8. Valve control according to one of the preceding claims, **characterized in that** the axial moveability of the transmission means (7) on the axial body (11) of the axis (6) is limited by at least one securing element.

9. Valve control according to one of the preceding claims, **characterized in that** an axial body (11) of the axis (6) is fastened on a bearing block (16), and the bearing block (16) has at least one reception recess (34, 34') with flank regions (35, 35'), in the inner space of which reception recess the transmission means (7) projects at least in regions, the flank regions (35, 35') at least partially surrounding the transmission means (7) on both sides.

10. Valve control according to Claim 9, **characterized in that** the surrounding of the transmission means (7) on both sides by the flank regions (35, 35') provides a clearance (36, 36') between the flank regions (35, 35') and the transmission means (7), and the clearance preferably amounts to 0.5 to 40.0 mm, especially preferably to 1 to 5 mm.

11. Valve control according to Claim 9 or 10, **characterized in that** an axial body (11) for mounting at least two transmission means (7) is fastened on the bearing block (16), and the bearing block (16) has at least two reception recesses (34, 34'), in the inner space of which in each case a transmission means (7) can be received, at least one fixing means (15) for fixing the axial body (11) of the axis (6) being arranged preferably in the region of a middle web (37) of the bearing block (16) which is arranged between the at least two reception recesses (34, 34').

12. Valve control according to one of the preceding claims, **characterized in that** at least two transmission means (7) and preferably a maximum of four transmission means (7), especially preferably exactly two transmission means (7), which are assigned to valves (1) of different cylinders of an engine, are mounted on at least one axial body (11), and preferably a first transmission means (7) of an axial body (11) of an axis (6) controls at least one outlet valve of a first cylinder and a second transmission means (7) which is arranged on the same axial body (11) controls at least one inlet valve of a second cylinder.

13. Method for limiting the axial moveability of a transmission means (7) for transmitting the movement of a cam (2) of a camshaft (3) to at least one valve (1), the transmission means (7) preferably being designed as a rocker arm (10) or drag lever, being mounted on an axial body (11) of an axis (6) and being provided with a contact element (8) which is arranged as contact means between the transmission means (7) and the camshaft (3), **characterized in that** the transmission means (7) is mounted axially moveably on the axial body (11), the contact surface (19) of the contact element (8) and the circumferential surface (20) of the cam (2) having, at least in regions, contours curved in the axial direction (21) and mutually corresponding, so that the curved and corresponding touch surfaces of the contact element (8) and cam (2) ensure at least limited axial moveability of the transmission means (7) in relation to the axis (6).

14. Engine, comprising a valve control and/or a method for limiting the axial moveability of a transmission means (7), mounted axially on an axial body (11) of an axis (6), according to one of the preceding claims.

15. Engine according to Claim 14, **characterized in that** the rocker arms (10) or drag levers of an engine are a maximum of two rocker arms (10) or drag levers of different geometry and/or dimensioning, preferably only one rocker arm (10) or drag lever of standard geometry and dimensioning being used.

## Revendications

1. Commande de soupape pour au moins une soupape d'un moteur à combustion interne, dans laquelle le mouvement d'au moins une came (2) d'un arbre à cames (3) peut être transmis à une queue de soupape (5) de la soupape (1) au moyen d'un mécanisme de transmission (4), dans laquelle le mécanisme de transmission (4) comprend au moins un moyen de transmission (7) monté de façon rotative sur un axe (6) qui est réalisé de préférence sous forme de culbuteur (10) ou de levier oscillant, et est en liaison avec l'arbre à cames (3) au moyen d'un élément de contact (8) disposé sur le moyen de transmission (7), **caractérisée en ce que** la face de contact (19) de l'élément de contact (8) et la face périphérique (20) de la came (2) présentent des contours incurvés au moins partiellement et se correspondant mutuellement en direction axiale (21) et le moyen de transmission (7) est mobile axialement sur un corps d'axe (11) de l'axe (6).

2. Commande de soupape selon la revendication 1, **caractérisée en ce que** l'élément de contact (8) est réalisé sous forme de corps roulant (17), qui est monté de façon rotative sur le moyen de transmission (7) au moyen d'un axe de corps roulant (18), dans laquelle la face de contact (19) est réalisée sous forme de face périphérique (22) du corps roulant (17) ou **en ce que** l'élément de contact (8) est réalisé sous forme de corps sphérique, qui est monté de façon mobile sur le moyen de transmission (7) au moyen d'un logement sphérique, dans laquelle la face de contact (19) est réalisée sous forme de surface du corps sphérique.

3. Commande de soupape selon la revendication 1 ou 2, **caractérisée en ce que** la face de contact (19) de l'élément de contact (8) présente au moins une zone de contour convexe et la face périphérique (20) de la came (2) présente au moins une zone de contour concave en direction axiale (21) ou la face de contact (19) de l'élément de contact (8) présente au moins une zone de contour concave et la face périphérique (20) de la came (2) présente au moins une zone de contour convexe en direction axiale (21).

4. Commande de soupape selon l'une quelconque des revendications 1 à 3, **caractérisée en ce que** le contour en direction axiale (21) de la came (2) et/ou de l'élément de contact (8), de préférence du corps roulant (17), comprend une zone centrale (27, 28) et au moins une zone de bord marginale (29, 30), dans laquelle la zone centrale (27, 28) est de préférence de forme exclusivement convexe ou de forme exclusivement concave.

5. Commande de soupape selon l'une quelconque des revendications précédentes, **caractérisée en ce que** la came (2) et/ou l'élément de contact (8) présente dans une première zone (31) un premier contour incurvé en direction axiale (21) et présente dans une deuxième zone (33) de la came (2) et/ou de l'élément de contact (8), disposée à équidistance à partir de l'axe longitudinal central (32), un deuxième contour incurvé, dans laquelle le premier et le deuxième contours incurvés présentent des rayons de courbure différents.

6. Commande de soupape selon l'une quelconque des revendications 2 à 5, **caractérisée en ce que** le contour convexe en direction axiale (21) de la face de contact (19) de l'élément de contact (8) ou le contour convexe de la face périphérique (20) de la came (2) présente un rayon (24) de 8 à 50 mm, de préférence de 10 à 40 mm, et de préférence encore de 15 à 25 mm.

7. Commande de soupape selon l'une quelconque des revendications 2 à 6, **caractérisée en ce que** le rapport du rayon (24) du contour convexe en direction axiale (21) du corps roulant (17) au diamètre extérieur (38) du corps roulant (17) se situe entre 1,00:0,15 et 1,00:3,45, de préférence entre 1,0:0,5 et 1,0:1,5 et/ou le rapport du rayon du contour concave du galet à la largeur du galet se situe entre 1,00:0,30 et 1:6, de préférence entre 1,0:0,5 et 1:30, de préférence encore entre 1:1 et 1:1,5.

8. Commande de soupape selon l'une quelconque des revendications précédentes, **caractérisée en ce que** la mobilité axiale du moyen de transmission (7) sur le corps d'axe (11) de l'axe (6) est limitée par au moins un élément de sécurité.

9. Commande de soupape selon l'une quelconque des revendications précédentes, **caractérisée en ce qu'**un corps d'axe (11) de l'axe (6) est fixé sur un socle de palier (16) et le socle de palier (16) présente au moins un évidement de réception (34, 34') avec des zones de flanc (35, 35') dans l'espace intérieur duquel le moyen de transmission (7) pénètre au moins partiellement, dans laquelle les zones de flanc (35, 35') encadrent au moins partiellement le moyen de transmission (7) sur les deux côtés.

10. Commande de soupape selon la revendication 9, **caractérisée en ce que** l'encadrement des deux côtés du moyen de transmission (7) par les zones de flanc (35, 35') prévoit une distance (36, 36') entre les zones de flanc (35, 35') et le moyen de transmission (7), et la distance vaut de préférence 0,5 à 40,0 mm, de préférence encore 1 à 5 mm.

11. Commande de soupape selon la revendication 9 ou 10, **caractérisée en ce qu'**un corps d'axe (11) est fixé sur le socle de palier (16) pour le logement d'au moins deux moyens de transmission (7) et le socle de palier (16) présente au moins deux évidements de réception (34, 34'), dont l'espace intérieur peut respectivement contenir un moyen de transmission (7), dans laquelle au moins un moyen de fixation (15) pour la fixation du corps d'axe (11) de l'axe (6) est disposé de préférence dans la région d'une nervure centrale (37) du socle de palier (16), qui est disposée entre les au moins deux évidements de réception (34, 34').

12. Commande de soupape selon l'une quelconque des revendications précédentes, **caractérisée en ce qu'**au moins deux moyens de transmission (7) et de préférence au maximum quatre moyens de transmission (7), de préférence encore exactement deux moyens de transmission (7), sont montés sur au moins un corps d'axe (11), et sont associés à des soupapes (1) de différents cylindres d'un moteur, de préférence un premier moyen de transmission (7) d'un corps d'axe (11) d'un axe (6) commande au moins une soupape d'échappement d'un premier cylindre et un deuxième moyen de transmission (7), qui est disposé sur le même corps d'axe (11), commande au moins une soupape d'admission d'un deuxième cylindre.

13. Procédé pour limiter la mobilité axiale d'un moyen de transmission (7) destiné à la transmission du mouvement d'une came (2) d'un arbre à cames (3) à au moins une soupape (1), dans lequel le moyen de transmission (7), réalisé de préférence sous forme de culbuteur (10) ou de levier oscillant, est monté sur un corps d'axe (11) d'un axe (6) et est doté d'un élément de contact (8), qui est disposé comme moyen de contact entre le moyen de transmission (7) et l'arbre à cames (3), **caractérisé en ce que** le moyen de transmission (7) est monté de façon mobile axialement sur le corps d'axe (11), dans lequel la face de contact (19) de l'élément de contact (8) et la face périphérique (20) de la came (2) présentent au moins partiellement des contours incurvés en direction axiale (21) et se correspondant mutuellement, de telle manière qu'au moins une mobilité axiale restreinte du moyen de transmission (7) par rapport à l'axe (6) soit garantie par les faces de contact incurvées et correspondantes de l'élément de contact (8) et de la came (2).

14. Moteur comprenant une commande de soupape et/ou un procédé pour limiter la mobilité axiale d'un moyen de transmission (7) monté sur un corps d'axe (11) d'un axe (6) selon l'une quelconque des revendications précédentes.

15. Moteur selon la revendication 14, **caractérisé en ce que** l'on utilise les culbuteurs (10) ou les leviers oscillants d'un moteur, au maximum deux culbuteurs (10) ou leviers oscillants différents en forme géométrique et/ou en dimensionnement, de préférence uniquement un culbuteur (10) ou un levier oscillant unitaire en forme géométrique et en dimensionnement.
